(19) **Europäisches Patentamt**
**European Patent Office**
**Office européen des brevets**

(11) **EP 1 454 410 B1**

(12) **EUROPÄISCHE PATENTSCHRIFT**

(45) Veröffentlichungstag und Bekanntmachung des Hinweises auf die Patenterteilung:
**01.08.2012   Patentblatt 2012/31**

(21) Anmeldenummer: **02803740.6**

(22) Anmeldetag: **04.11.2002**

(51) Int Cl.:
***H02P 1/28*** *(2006.01)*

(86) Internationale Anmeldenummer:
**PCT/DE2002/004091**

(87) Internationale Veröffentlichungsnummer:
**WO 2003/047086 (05.06.2003 Gazette 2003/23)**

(54) **VERFAHREN ZUR MINDERUNG DES EINFLUSSES EINES GLEICHSTROMANTEILS IM LASTSTROM EINES ASYNCHRONMOTORS**

METHOD FOR REDUCING THE INFLUENCE OF A DC CURRENT COMPONENT IN THE LOAD CURRENT OF AN ASYNCHRONOUS MOTOR

PROCEDE PERMETTANT DE REDUIRE L'INFLUENCE DE LA FRACTION COURANT CONTINU DU COURANT SOUS CHARGE D'UN MOTEUR ASYNCHRONE

(84) Benannte Vertragsstaaten:
**DE FR IT SE**

(30) Priorität: **15.11.2001   DE 10156216**

(43) Veröffentlichungstag der Anmeldung:
**08.09.2004   Patentblatt 2004/37**

(73) Patentinhaber: **SIEMENS AKTIENGESELLSCHAFT 80333 München (DE)**

(72) Erfinder:
  • **GRIEPENTROG, Gerd 91468 Gutenstetten (DE)**
  • **RUNGGALDIER, Diethard 96135 Stegaurach (DE)**
  • **FRITSCH, Andreas 92245 Kümmersbruck (DE)**
  • **SEITZ, Johann 92224 Amberg (DE)**

(56) Entgegenhaltungen:
WO-A-98/16004        DE-A- 2 500 911
DE-A- 19 843 106

**Beschreibung**

Drehstromsteller dosieren nach dem Prinzip des Phasenanschnitts die einer elektrischen Last zugeführte Energie. Dadurch kann bei Asynchronmaschinen eine Reduzierung der Anlaufströme und -momente bewirkt werden. Als Maß der zugeführten Energie wird der Phasenanschnittswinkel herangezogen. Die am Ausgang des Drehstromstellers angeschlossene Last wird von Stromhalbwellen alternierender Polarität durchflossen, wobei zwischen jeweils zwei aufeinanderfolgenden Stromhalbwellen ein durch den Phasenanschnitt bestimmter stromloser Zeitabschnitt - auch als Delay bezeichnet - liegt.

Üblicherweise werden Drehstromsteller mit drei Paaren antiparallel geschalteter Thyristoren ausgerüstet. Da die Thyristoren mit zunehmender Nennleistung der Drehstromsteller jedoch der kostenbestimmende Faktor sind, werden auch Drehstromsteller mit nur zwei Paaren antiparallel geschalteter Thyristoren eingesetzt. Die verbleibende dritte Phase ist bei diesen so genannten zweiphasigen Drehstromstellern als nicht schaltbarer Leiter ausgeführt. Eine derartige Ansteuerung ist aus der DE 30 09 445 A1 bekannt. Aus der WO 98/16004 A ist ein Drehstromsteller zur Steuerung einer an ein Drehstromnetz angeschlossenen Last bekannt.

Der Erfindung liegt die Aufgabe zugrunde zumindest ein Verfahren anzugeben, mit dem bei geringem Aufwand der Laststrom und demnach das Lastmoment eines über einen zweiphasigen Thyristor-Drehstromsteller mit Phasenanschnitt gesteuerten Asynchronmotors im Sinne eines Sanftanlaufs beeinflusst werden kann.

Diese Aufgabe wird erfindungsgemäß durch ein erstes Verfahren gemäß Patentanspruch 1 bzw. durch ein zweites Verfahren gemäß Patentanspruch 9 gelöst; vorteilhafte Ausgestaltungen sind Gegenstand der Patentansprüche 2 bis 8 bzw. 10 bis 12.

Die Erfindung geht von der Erkenntnis aus, dass zweiphasige Drehstromsteller prinzipbedingt bei Werten des Phasenanschnitts im Bereich von 75° $\pm$ 10° dazu neigen, unsymmetrische Stromhalbwellen positiver und negativer Polarität zu erzeugen. Demzufolge weisen die aufeinander folgenden, einander abwechselnden positiven und negativen Stromhalbwellen jeweils eine unterschiedliche Zeitdauer und Amplitude auf. Hierdurch kommt es zu einem Gleichstromanteil im Laststrom, der beispielsweise bei Asynchronmaschinen Bremsmomente erzeugt und somit einen Sanftanlauf erschwert bzw. vollkommen unmöglich macht.

Mit diesen Verfahren wird erreicht, dass der phasenangeschnittene, mit Stromhalbwellen alternierender Polarität und unterschiedlicher Dauer und Amplitude und demnach mit Bremsmomente erzeugenden Gleichstromanteilen versehene, Laststrom derart beeinflusst werden kann, dass ohne Verwendung von Messmitteln zur Bestimmung der von den Stromhalbwellen eingeschlossenen Strom-Zeitflächen eine Minderung der Gleichstromanteile erfolgt und dadurch ein gleichmäßiger Anstieg und Verlauf aller Effektivströme im Sinne des gewünschten Sanftanlaufs gegeben ist.

Gemäß des zweiten Verfahren nach Patentanspruch 9 werden lediglich Stromfluss- und im allgemeinen keine Regelkreisinformationen benötigt, so dass dieses gegenüber dem ersten Verfahren mit vereinfachten und ggf. eingeschränkten Steuerungsmitteln umgesetzt werden kann. Zudem entfällt die Erfassung der Löschzeitpunkte, wodurch Soft- und/oder Hardwaremodule eingespart werden können.

Mit Vorteil können gemäß einer vorteilhaften Weiterbildung des ersten Verfahrens u.a. auch Stromwandler zur Ermittlung der Stromflusswinkel eingespart werden, sofern der jeweilige Zünd- und Löschzeitpunkt anhand eines Spannungsanstiegs über dem zugehörigen Thyristor des Thyristor-Drehstromsteller bestimmt werden kann.

Die Erfindung sowie vorteilhafte Ausgestaltungen gemäß Merkmalen der Unteransprüche werden im folgenden anhand in der Zeichnung schematisch dargestellter Ausführungsbeispiele näher erläutert; darin zeigen:

FIG 1     ein Diagramm mit drei Phasen eines Laststroms vor und nach dem Einsetzen eines ersten Verfahrens zur Minderung des Einflusses eines Gleichstromanteils, und

FIG 2     ein Diagramm mit drei Phasen eines Laststromes vor und nach dem Einsetzen eines zweiten Verfahrens zur Minderung des Einflusses eines Gleichstromanteils.

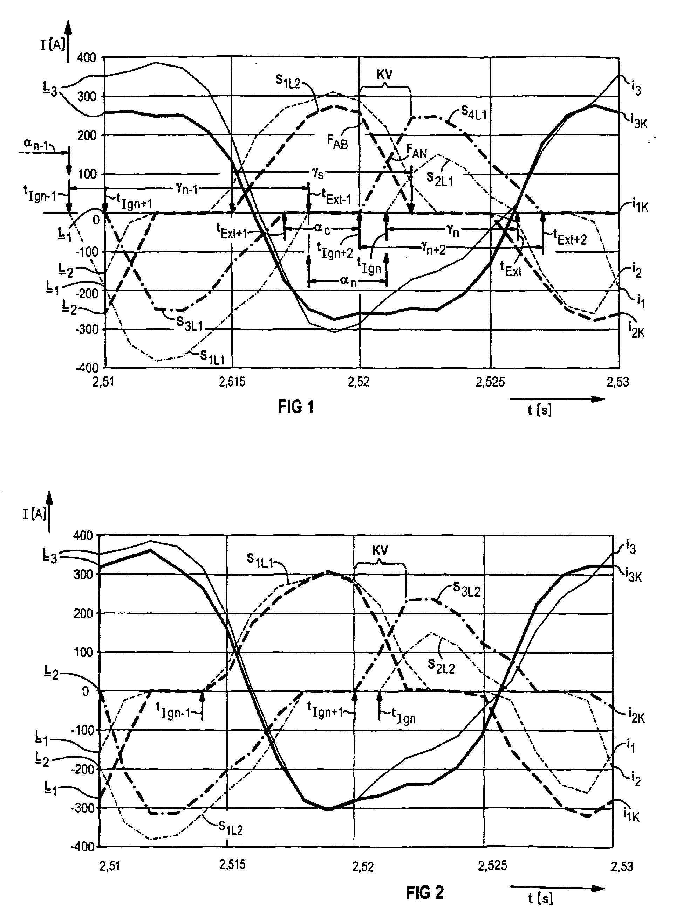

In FIG 1 ist ein Diagramm gezeigt, das den zeitlichen Verlauf eines dreiphasigen Drehstromes während eines Anlaufs einer Asynchronmaschine mit einem zweiphasigen Drehstromsteller vor und nach dem Einsetzen eines ersten Verfahrens zur Minderung des Einflusses eines Gleichstromanteils wiedergibt. Dabei ist ein Strom $i_1$ und $i_2$ einer ersten bzw. einer zweiten gesteuerten Phase $L_1$ bzw. $L_2$ sowie ein Strom $i_3$ einer dritten ungesteuerten Phase $L_3$ mit jeweils ausgeprägten Gleichstromanteilen dargestellt.

Des Weiteren ist den Strömen $i_1$ und $i_2$ jeweils ein verfahrensgemäß korrigierter Strom $i_{1K}$ bzw. $i_{2K}$ sowie dem Strom $i_3$ ein von der verfahrensgemäßen Korrektur beeinflusster Strom $i_{3K}$ phasengleich zugeordnet. Zur Steuerung der Phasen $L_1$ bis $L_3$ wird der Phasenanschnitt mittels einer bestimmbaren Funktion über eine Rampe, insbesondere über eine lineare Rampe, zugeführt.

Das erste Verfahren sieht zur Minderung des Einflusses des Gleichstromanteils zunächst in der ersten gesteuerten Phase $L_1$ die Erfassung des Stromflusswinkels $\gamma_{n-1}$ einer ersten Stromhalbwelle $S_{1L1}$ aus deren Zündzeitpunkt $t_{Ign-1}$ und deren Löschzeitpunkt $t_{Ext-1}$ vor. Dann wird in der ersten gesteuerten Phase $L_1$ der Stromflusswinkel $\gamma_n$ einer

folgenden zweiten Stromhalbwelle $S_{2L_1}$ aus deren Zündzeitpunkt $t_{Ign}$ und deren Löschzeitpunkt $t_{Ext}$ erfasst. Der jeweilige Zünd- und Löschzeitpunkt wird anhand eines Spannungsanstiegs über dem zugehörigen Thyristor des Thyristor-Drehstromsteller erfasst, wobei konventionelle Steuerungsmittel eingesetzt werden können.

Im Anschluss daran wird die Differenz zwischen dem Stromflusswinkel $\gamma_{n-1}$ der ersten Stromhalbwelle $S_{1L_1}$ und dem Stromflusswinkel $\gamma_n$ der zweiten Stromhalbwelle $S_{2L_1}$ erfasst. Schließlich wird in der ersten gesteuerten Phase $L_1$ auf Grund der erfassten Differenz der Zündzeitpunkt $t_{Ign+1}$ einer folgenden korrigierten dritten Stromhalbwelle $S_{3L_1}$ im Sinne einer Angleichung der Stromflusswinkel der Stromhalbwellen bestimmt.

Der Zündzeitpunkt wird kontinuierlich für weitere folgende Stromhalbwellen auf Grund der erfassten Differenz der Stromflusswinkel der jeweils vorhergehenden Stromhalbwellen bestimmt. Dadurch ergibt sich unter anderem der Zündzeitpunkt $t_{Ign+2}$ einer folgenden korrigierten vierten Stromhalbwelle $S_{4L_1}$.

Sowohl die der zweiten Stromhalbwelle $S_{2L_1}$ folgende dritte Stromhalbwelle $S_{3L_1}$ mit dem zugehörigen Zünd- und Löschzeitpunkt $t_{Ign+1}$ bzw. $t_{Ext+1}$ wie auch die der dritten Stromhalbwelle $S_{3L_1}$ folgende vierte Stromhalbwelle $S_{4L_1}$ mit dem zugehörigen Zünd- und Löschzeitpunkt $t_{Ign+2}$ bzw. $t_{Ext+2}$ der ersten gesteuerten Phase $L_1$ sind gemäß FIG 1 zur Verdeutlichung der verfahrensgemäßen Angleichung mit den Stromflusswinkeln der ersten Stromhalbwelle $S_{1L_1}$ bzw. der zweiten Stromhalbwelle $S_{2L_1}$ der ersten gesteuerten Phase $L_1$ überlagert.

Demzufolge setzt, bei einem schematischen Vergleich, der korrigierte Zündzeitpunkt $t_{Ign+1}$ der dritten Stromhalbwelle $S_{3L_1}$ verfahrensgemäß später als der ursprüngliche Zündzeitpunkt $t_{Ign-1}$ der ersten Stromhalbwelle $S_{1L_1}$ und der korrigierte Zündzeitpunkt $t_{Ign+2}$ der vierten Stromhalbwelle $S_{4L_1}$ verfahrensgemäß früher ein als der ursprüngliche Zündzeitpunkt $t_{Ign}$ der zweiten Stromhalbwelle $S_{ZL_1}$.

Zeitgleich mit der Anwendung des einphasenbezogenen ersten Verfahrens auf die erste gesteuerte Phase $L_1$ kann dieses auch wechselwirkungsfrei, d.h. dass die erste Phase $L_1$ unabhängig von der, zweiten Phase $L_2$ gesteuert wird, für die zweite gesteuerte Phase $L_2$ eingesetzt werden. Gemäß FIG 1 ist hierbei der Kommutierungsvorgang KV anhand der abfallenden Flanke $F_{AB}$ einer Stromhalbwelle $S_{1L_2}$ der zweiten gesteuerten Phase $L_2$ und einer ansteigenden Flanke $F_{AN}$ der vierten Stromhalbwelle $S_{4L_1}$ der ersten gesteuerten Phase $L_1$ verdeutlicht.

Da die beiden gesteuerten Phasen $L_1$ und $L_2$ durch das erste Verfahren Stromhalbwellen $S_{1L_2}$ und $S_{4L_1}$ mit angeglichenen Stromflusswinkeln $\gamma_s$ bzw. $\gamma_{n+2}$ aufweisen, wird auch die dritte ungesteuerte Phase $L_3$ in ihrem Stromverlauf günstig beeinflusst, so dass ein gleichmäßiger Anstieg und Verlauf aller Effektivströme bewirkt wird. Grundsätzlich wirkt sich die Verminderung der Gleichstromanteile in einem Laststrom auch positiv auf ggf. eingesetzte induktive Messmittel aus, da eine Sättigung vermieden und dadurch Fehlmessungen vorgebeugt werden kann.

Entgegen der polaritätssymmetrischen Ansteuerung bzw. Zündung werden fortlaufend Zündzeitpunkte mittels eines Korrekturfaktors C derart vor- oder nachverlegt, dass quasi eine Kompensation unterschiedlicher Stromflusswinkel positiver und negativer Stromhalbwellen herbeigeführt wird. Polaritätssymmetrisch bedeutet, dass der stromlose Zeitabschnitt - Delay bzw. Phasenanschnittswinkel $\alpha$ - zwischen zwei aufeinander folgenden Stromhalbwellen alternierender Polarität beim Übergang von einer positiven zu einer negativen Stromhalbwelle genau so groß ist wie beim Übergang von einer negativen zu einer positiven Stromhalbwelle.

Üblicherweise geht mit der polaritätssymmetrischen auch eine phasensymmetrische Ansteuerung bzw. Zündung einher. Phasensymmetrisch bedeutet, dass der stromlose Zeitabschnitt auch in den Thyristor-Ventilsätzen - drei Paare antiparallel geschaltete Thyristoren - der drei Phasen $L_1$ bis $L_3$ gleich groß ist. Der Korrekturfaktor C kann je nach Motor und Lastzustand einen Wert von 0,1 bis 0,4, insbesondere 0,2 aufweisen.

Demnach wird beim Löschen eines Thyristor-Ventilsatzes der zweiten Stromhalbwelle $S_{2L_1}$ der korrigierte Zündzeitpunkt $\gamma_{n+1}$ einer jeweils folgenden dritten Stromhalbwelle $S_{3L_1}$ gemäß folgender Gleichung bestimmt:

$$t_{Ign+1} = t_{Ext} + \frac{\alpha_c}{360°} * T \qquad (1)$$

Dabei gibt $t_{Ext}$ den Löschzeitpunkt der der dritten Stromhalbwelle $S_{3L_1}$ vorausgehenden Stromhalbwelle, T die Periodendauer und $\alpha_c$ den korrigierten Phasenanschnittswinkel an. Bei einer alternierenden Stromform mit einer Frequenz von 50 Hz beträgt die Periodendauer T z.B. 20 ms. Der korrigierte Phasenanschnittswinkel $\alpha_c$ wird demnach gemäß folgender Gleichung bestimmt:

$$\alpha_c = \alpha_T \pm C * \Delta\gamma \qquad (2)$$

Dabei gibt $\alpha_T$ den gemittelten Phasenanschnittswinkel an, der mit folgender Gleichung bestimmt wird:

$$\alpha_T = \frac{\alpha_n + \alpha_{n-1}}{2} \qquad\qquad (3)$$

Dabei gibt $\alpha_{n-1}$ den Phasenanschnittswinkel einer ersten Stromhalbwelle $S_{1L1}$ und $\alpha_n$ den Phasenanschnittswinkel einer zweiten Stromhalbwelle $S_{ZL1}$ an.

Des Weiteren gibt C den konstanten Korrekturfaktor, der zwischen 0,1 bis 0,4, insbesondere bei 0,2 liegt und $\Delta\gamma$ die Differenz aufeinander folgender Stromflusswinkel gemäß folgender Gleichung an:

$$\Delta\gamma = \gamma_n - \gamma_{n-1} \qquad\qquad (4)$$

Auf Grund der wechselnden Polarität aufeinanderfolgender Stromhalbwellen beschreibt $\Delta\gamma$ immer den Unterschied zwischen der Dauer einer positiven und einer negativen Stromhalbwelle.

Dabei steht $\gamma_{n-1}$ für den Stromflusswinkel einer ersten Stromhalbwelle $S_{1L1}$ gemäß nachstehender Gleichung:

$$\gamma_{n-1} = \frac{t_{Ext-1} - t_{Ign-1}}{T} * 360° \qquad\qquad (5)$$

Dabei gibt $t_{Ext-1}$ den Löschzeitpunkt der der zweiten Stromhalbwelle $S_{2L1}$ vorausgehenden Stromhalbwelle $S_{1L1}$ und $t_{Ign-1}$ den Zündzeitpunkt der der zweiten Stromhalbwelle $S_{2L1}$ vorausgehenden ersten Stromhalbwelle $S_{1L1}$ an.

Des Weiteren steht $\gamma_n$ für den Stromflusswinkel einer folgenden zweiten Stromhalbwelle $S_{2L1}$ gemäß folgender Gleichung:

$$\gamma_n = \frac{t_{Ext} - t_{Ign}}{T} * 360° \qquad\qquad (6)$$

Dabei steht $t_{Ign}$ für den Zündzeitpunkt der der ersten Stromhalbwelle $S_{1L1}$ nachfolgenden zweiten Stromhalbwelle $S_{2L1}$.

Um die Korrektur nach dem nächsten Löschzeitpunkt durchführen zu können, ist der Stromflusswinkel $\gamma_n$ im Sinne einer weiteren ersten Stromhalbwelle bei fortlaufender Angleichung gemäß folgender Gleichung abzuspeichern:

$$\gamma_{n-1} := \gamma_n \qquad\qquad (7)$$

Vorteilhafterweise werden für das erste Verfahren nur Zeit- und im allgemeinen keine Regelkreisinformationen benötigt, wobei die Zeitinformationen in einer konventionellen Steuerung für Drehstromstellern ohnehin zur Berechnung der Zündzeitpunkte zur Verfügung stehen, so dass das erste Verfahren mit einem geringen Aufwand umgesetzt werden kann.

Ein derart betriebener Asynchronmotor entwickelt von Beginn der Ansteuerung an ein mit abnehmendem Phasenanschnitt kontinuierlich zunehmendes Drehmoment, so dass dieser binnen eines Zeitbereichs von etwa 2s bis 4s im Sinne eines Sanftanlaufs auf die jeweilige Nenndrehzahl beschleunigt wird. Des Weiteren sind gegenüber der konventionellen Ansteuerung mit einem zweiphasigen Drehstromsteller die Effektivwerte der Ströme $i_1$ bis $i_3$ durch die Minderung der Gleichstromanteile reduziert.

Wesentlicher Gedanke der vorliegenden Idee ist es, die Dauer aufeinander folgender Stromhalbwellen alternierender Polarität in ein und derselben Phase zu egalisieren, um Gleichstromanteile oder -komponenten bei Werten des Phasenanschnitts im Bereich von 75° ± 10° zu unterdrücken. Die Korrektur wird in der Regel bis zum Ende der Rampenfunktion beibehalten.

Die zuvor erläuterte Erfindung kann wie folgt zusammengefasst werden:

Um mit geringem Aufwand den Laststrom und demnach das Lastmoment eines über einen zweiphasigen Thyristor-Drehstromsteller mit Phasenanschnitt gesteuerten Asynchronmotors im Sinne eines Sanftanlaufs beeinflussen zu können, ist gemäß des ersten Verfahrens vorgesehen, in den gesteuerten Phase ($L_1$ und $L_2$) den Zündzeitpunkt ($t_{Ign+1}$) im Sinne einer Angleichung der Stromflusswinkel der folgenden Stromhalbwellen zu bestimmen.

In FIG 2 ist ein Diagramm gezeigt, das den zeitlichen Verlauf in etwa einer Periode eines dreiphasigen Drehstromes während eines Anlaufs einer Asynchronmaschine mit einem zweiphasigen Drehstromsteller vor und nach dem Einsetzen eines zweiten Verfahrens zur Minderung des Einflusses eines Gleichstromanteils wiedergibt. Dabei ist ein Strom $i_1$ und $i_2$ einer ersten bzw. einer zweiten gesteuerten Phase $L_1$ bzw. $L_2$ sowie ein Strom $i_3$ einer dritten ungesteuerten Phase $L_3$ mit jeweils ausgeprägten Gleichstromanteilen dargestellt.

Des Weiteren ist den Strömen $i_1$ und $i_2$ jeweils ein verfahrensgemäß korrigierter Strom $i_{1K}$ bzw. $i_{2K}$ sowie dem Strom $i_3$ ein von der verfahrensgemäßen Korrektur beeinflusster Strom $i_{3K}$ phasengleich zugeordnet. Zur Steuerung der Phasen $L_1$ bis $L_3$ wird der Phasenanschnitt mittels einer bestimmbaren Funktion über eine Rampe, insbesondere über eine lineare Rampe, zugeführt.

Das zweite Verfahren sieht zur Minderung des Einflusses des Gleichstromanteils zunächst in einer ersten gesteuerten Phase $L_1$ die Erfassung des Zündzeitpunktes $t_{Ign-1}$ einer ersten Stromhalbwelle $S_{1L1}$ vor. Dann wird zum Zündzeitpunkt $t_{Ign-1}$ der ersten Stromhalbwelle $S_{1L1}$ der ersten gesteuerten Phase $L_1$ der Stromfluss in der ersten Stromhalbwelle $S_{1L2}$ einer zweiten gesteuerten Phase $L_2$ erfasst. Schließlich wird in der zweiten gesteuerten Phase $L_2$ auf Grund des erfassten Stromflusses der Zündzeitpunkt $t_{Ign}$ der folgenden zweiten Stromhalbwelle $S_{2L2}$ auf einen diesem nachfolgenden Zündzeitpunkt $t_{Ign+1}$ einer dritten Stromhalbwelle $S_{3L2}$ vorverlegt.

Gemäß FIG 2 ist die dritte Stromhalbwelle $S_{3L2}$ im Vergleich zur zweiten Stromhalbwelle $S_{2L2}$ überlagern dargestellt, wobei prinzipiell die dritte Stromhalbwelle $S_{3L2}$ auf die zweite Stromhalbwelle $S_{2L2}$ folgt. Die Vorverlegung erfolgt kontinuierlich mittels eines definierbaren Korrekturfaktors C, wobei eine Nichterfüllung der Bedingung keine Korrektur während der jeweiligen Rampenfunktion des Phasenanschnitts zur Folge hat. Der Korrekturfaktor C kann je nach Motor und Lastzustand einen Wert von -9° bis -15, insbesondere -12° aufweisen, so dass das zweite Verfahren demnach nicht mehr phasensymmetrisch ist.

Die Detektion dieser so genannten Triggerzeitpunkte für die Korrektur der Phasenanschnittswerte bzw. Zündzeitpunkte wird während der Rampenfunktion des Phasenanschnitts fortlaufend durchgeführt, womit eine zeitlich unabhängige Korrektur gegeben ist, die in der Regel bis zum Ende der Rampenfunktion beibehalten wird.

Zeitgleich mit der Bedingungsabfrage auf Stromfluss in der zweiten gesteuerten Phase $L_2$ kann das zweiphasenbezogene zweite Verfahren ebenfalls die Bedingung auf Stromfluss in der ersten gesteuerten Phase $L_1$ abfragen, so dass eine jeweils voneinander abhängige Ansteuerung gegeben ist.

Bedingt durch die Vorverlegung des entsprechenden Zündzeitpunktes tritt ein größerer Kommutierungsstrom auf, so dass dies einen höheren Stromanstieg zu Folge hat und demnach der korrespondierende Löschzeitpunkt später eintritt, wodurch sich letztlich die zugehörigen Stromflusswinkel vergrößern bzw. verkleinern.

Bei der Durchführung des zweiten Verfahrens können beispielsweise steuerungsseitig zwei Eingangssignale, zwei Ausgangssignale und insgesamt vier Interruptroutinen zum Einsatz kommen. Bei den beiden Eingangssignalen handelt es sich um Stromnulldurchgangssignale und bei den Ausgangssignalen um Thyristorzündsignale der beiden gesteuerten Phasen $L_1$ und $L_2$. Der Trigger für die Interruptroutinen ist jeweils die negative Flanke - tritt bei einer Netzfrequenz von 50 Hz alle 10 ms auf - eines Stromnulldurchgangsignals. Hierbei wird der aktuelle Phasenanschnitt in ein so genanntes Timerregister geladen und der Timer gestartet.

Sofern der Timer überläuft wird in die Interruptroutine gewechselt, um dort einen Zündimpuls für die jeweilige Phase durch ein erneutes Laden und Starten des Timers zu generieren. Verfahrensgemäß wird während der gesamten Rampenfunktion des Phasenanschnitts zum Beginn der Generierung des Zündimpulses der Signalpegel des entsprechenden Eingangssignals der ersten und der zweiten gesteuerten Phase $L_1$ bzw. $L_2$ abgefragt. Sofern ein Stromfluss vorhanden ist, wird ein erstes und/oder ein zweites Flag gesetzt.

Vor dem Laden des aktuellen Phasenanschnittwertes in das Timerregister wird das jeweilige Flag abgefragt. Ist eines oder sind beide Flags gesetzt wird der jeweilige Phasenanschnittswinkel vor dem Laden um den konstanten Korrekturfaktor C verändert. Ist eines oder kein Flag gesetzt, wird der jeweilige Phasenanschnittswinkel der ersten bzw. der zweiten gesteuerten Phase $L_1$ bzw. $L_2$ unverändert in das Timerregister geladen, wobei hierfür konventionelle Steuerungsmittel eingesetzt werden können.

Ein derart betriebener Asynchronmotor entwickelt von Beginn der Ansteuerung an ein mit abnehmendem Phasenanschnitt kontinuierlich zunehmendes Drehmoment, so dass dieser binnen eines Zeitbereichs von etwa 2s bis 4s im Sinne eines Sanftanlaufs auf die jeweilige Nenndrehzahl beschleunigt wird. Des Weiteren sind gegenüber der konventionellen Ansteuerung mit einem zweiphasigen Drehstromsteller die Effektivwerte der Ströme $i_1$ bis $i_3$ durch die Minderung der Gleichstromanteile reduziert.

Wesentlicher Gedanke der vorliegenden Idee ist es, die Zündzeitpunkte aufeinander folgender Stromhalbwellen alternierender Polarität zweier gesteuerter Phasen in Abhängigkeit von einer Stromflussbedingung vorzuverlegen, um Gleichstromanteile oder -komponenten bei Werten des Phasenanschnitts im Bereich von 75° ± 10° zu unterdrücken.

Die zuvor erläuterte Erfindung kann wie folgt zusammengefasst werden:

Um mit geringem Aufwand den Laststrom und demnach das Lastmoment eines über einen zweiphasigen Thyristor-Drehstromsteller mit Phasenanschnitt gesteuerten Asynchronmotors im Sinne eines Sanftanlaufs beeinflussen zu können, ist gemäß eines zweiten Verfahrens vorgesehen, in beiden gesteuerten Phasen ($L_1$ und $L_2$) den Zündzeitpunkt ($t_{Ign}$) der folgenden Stromhalbwellen vorzuverlegen.

**Patentansprüche**

1. Verfahren zur Minderung des Einflusses eines Gleichstromanteils im Laststrom eines über einen zweiphasigen Thyristor-Drehstromsteller mit Phasenanschnitt gesteuerten Asynchronmotors mit folgenden Verfahrensschritten:

a) zunächst wird in einer ersten gesteuerten Phase ($L_1$) der Stromflusswinkel ($\gamma_{n-1}$) einer ersten Stromhalbwelle ($S_{1L1}$) aus deren Zündzeitpunkt ($t_{Ign-1}$) und deren Löschzeitpunkt ($t_{Ext-1}$) erfasst,
b) dann wird in der ersten gesteuerten Phase ($L_1$) der Stromflusswinkel ($\gamma_n$) einer folgenden zweiten Stromhalbwelle ($S_{2L1}$) aus deren Zündzeitpunkt ($t_{Ign}$) und deren Löschzeitpunkt ($t_{Ext}$) erfasst,
c) dann wird die Differenz ($\Delta\gamma$) zwischen dem Stromflusswinkel ($\gamma_{n-1}$) der ersten Stromhalbwelle ($S_{1L1}$) und dem Stromflusswinkel ($\gamma_n$) der zweiten Stromhalbwelle ($S_{2L1}$) erfasst,
d) schließlich wird in der ersten gesteuerten Phase ($L_1$) auf Grund der erfassten Differenz ($\Delta\gamma$) der Zündzeitpunkt ($t_{Ign+1}$) einer folgenden dritten Stromhalbwelle ($S_{3L1}$) im Sinne einer Angleichung der Stromflusswinkel der Stromhalbwellen bestimmt.

2. Verfahren nach Anspruch 1, mit folgendem Verfahrensschritt:

- der Zündzeitpunkt ($t_{Ign+1}$) wird kontinuierlich für eine folgende Stromhalbwelle auf Grund der erfassten Differenz ($\Delta\gamma$) der Stromflusswinkel der jeweils vorhergehenden Stromhalbwellen bestimmt.

3. Verfahren nach Anspruch 1 und/oder 2, mit folgendem Verfahrensschritt:

- der Zündzeitpunkt ($t_{Ign+1}$) wird mittels eines definierbaren Korrekturfaktors (C) bestimmt.

4. Verfahren nach Anspruch 3, mit einem Korrekturfaktor (C) von 0,1 bis 0,4, insbesondere 0,2.

5. Verfahren nach Anspruch 1 und/oder 2, mit folgendem Verfahrensschritt:

- der jeweilige Zünd- und Löschzeitpunkt wird anhand eines Spannungsanstiegs über dem zugehörigen Thyristor des Thyristor-Drehstromsteller erfasst.

6. Verfahren nach Anspruch 1 bis 3, mit folgendem Verfahrensschritt:

- der Zündzeitpunkt ($t_{Ign+1}$) einer jeweils folgenden dritten Stromhalbwelle ($S_{3L1}$) wird bestimmt gemäß:

$$t_{Ign+1} = t_{Ext} + \frac{\alpha_C}{360°} * T$$

dabei bedeuten:

$t_{Ext}$ = Löschzeitpunkt der der dritten Stromhalbwelle vorausgehenden Stromhalbwelle
T = Periodendauer
$\alpha_C$ = korrigierter Phasenanschnittswinkel gemäß:

$$\alpha_C = \alpha_T \pm C * \Delta\gamma$$

dabei bedeuten:

$\alpha_T$ = gemittelter Phasenanschnittswinkel

$$\alpha_T = \frac{\alpha_n + \alpha_{n-1}}{2}$$

dabei bedeuten:

$\alpha_{n-1}$ = Phasenanschnittswinkel einer ersten Stromhalbwelle
$\alpha_n$ = Phasenanschnittswinkel einer zweiten Stromhalbwelle
C = Korrekturfaktor (0,1 bis 0,4, insbesondere 0,2)
$\Delta\gamma$ = Differenz aufeinander folgender Stromflusswinkel gemäß:

$$\Delta\gamma = \gamma_n - \gamma_{n-1}$$

dabei bedeuten:

$\gamma_{n-1}$ = Stromflusswinkel einer ersten Stromhalbwelle gemäß:

$$\gamma_{n-1} = \frac{t_{Ext-1} - t_{Ign-1}}{T} * 360°$$

dabei bedeuten:

$t_{Ext-1}$ = Löschzeitpunkt der der zweiten Stromhalbwelle vorausgehenden Stromhalbwelle
$t_{Ign-1}$ = Zündzeitpunkt der der zweiten Stromhalbwelle vorausgehenden Stromhalbwelle

dabei bedeuten:

$\gamma_n$ = Stromflusswinkel einer folgenden zweiten Stromhalbwelle gemäß:

$$\gamma_n = \frac{t_{Ext} - t_{Ign}}{T} * 360°$$

bzw. Stromflusswinkel einer weiteren ersten Stromhalbwelle bei fortlaufender Angleichung gemäß:

$$\gamma_{n-1} := \gamma_n$$

dabei bedeuten:

$t_{Ign}$ = Zündzeitpunkt der der ersten Stromhalbwelle nachfolgenden Stromhalbwelle

7. Verfahren nach Anspruch 1 bis 4, für die erste und/oder für die zweite Phase ($L_1$ bzw. $L_2$) in jeweils voneinander unabhängiger Ansteuerung.

8. Verfahren nach Anspruch 1 bis 5, mit im Sinne eines Sanftanlaufs des Asynchronmotors rampenartiger Ansteuerung der Phasen ($L_1$ und $L_2$).

9. Verfahren zur Minderung des Einflusses eines Gleichstromanteils im Laststrom eines über einen zweiphasigen Thyristor-Drehstromsteller mit Phasenanschnitt gesteuerten Asynchronmotors mit folgenden Verfahrensschritten:

a) zunächst wird in einer ersten gesteuerten Phase ($L_1$) der Zündzeitpunkt ($t_{Ign-1}$) einer ersten Stromhalbwelle ($S_{1L1}$) erfasst,
b) dann wird zum Zündzeitpunkt ($t_{Ign-1}$) der ersten Stromhalbwelle ($S_{1L1}$) der ersten gesteuerten Phase ($L_1$) der Stromfluss in der ersten Stromhalbwelle ($S_{1L2}$) einer zweiten gesteuerten Phase ($L_2$) erfasst,
c) schließlich wird in der zweiten gesteuerten Phase ($L_2$) auf Grund des erfassten Stromflusses der Zündzeitpunkt ($t_{Ign}$) der folgenden zweiten Stromhalbwelle ($S_{2L2}$) vorverlegt.

10. Verfahren nach Anspruch 7, mit folgendem Verfahrensschritt:

- der Zündzeitpunkt ($t_{Ign}$) wird kontinuierlich für eine folgende Stromhalbwelle ($S_{2L2}$) mittels eines definierbaren Korrekturfaktors (C) bestimmt.

11. Verfahren nach Anspruch 8, mit einem Korrekturfaktor (C) von -9° bis -15°.

12. Verfahren nach Anspruch 7 bis 10, mit im Sinne eines Sanftanlaufs des Asynchronmotors rampenartiger Ansteuerung der Phasen.

**Claims**

1. Method for reducing the influence of a DC component in the load current of an asynchronous motor which is controlled via a two-phase thyristor three-phase controller with phase gating, having the following method steps:

a) first of all, the current flow angle ($\gamma_{n-1}$) in a first current half-cycle ($S_{1L1}$) is detected in a first controlled phase ($L_1$) from its turn-on time ($t_{Ign-1}$) and its turn-off time ($t_{Ext-1}$),
b) then, the current flow angle ($\gamma_n$) in a subsequent second current half-cycle ($S_{2L1}$) is recorded in the first controlled phase ($L_1$) from its turn-on time ($t_{Ign}$) and its turn-off time ($t_{Ext}$),
c) then, the difference ($\Delta\gamma$) between the current flow angle ($\gamma_{n-1}$) in the first current half-cycle ($S_{1L1}$) and the current flow angle ($\gamma_n$) in the second current half-cycle ($S_{2L1}$) is recorded,
d) finally, the turn-on time ($t_{Ign+1}$) in a subsequent third current half-cycle ($S_{3L1}$) is determined in the first controlled phase ($L_1$) on the basis of the recorded difference ($\Delta\gamma$), in the sense of matching the current flow angles in the current-half cycles.

2. Method according to Claim 1, having the following method step:

- the turn-on time ($t_{Ign+1}$) is determined continuously for a subsequent current half-cycle on the basis of the recorded difference ($\Delta\gamma$) between the current flow angles in the respective preceding current half-cycles.

3. Method according to Claim 1 and/or 2, having the following method step:

- the turn-on time ($t_{Ign+1}$) is determined by means of a definable correction factor (C).

4. Method according to Claim 3, having a correction factor (C) of 0.1 to 0.4, in particular 0.2.

5. Method according to Claim 1 and/or 2, having the following method step:

- the respective turn-on and turn-off time is recorded on the basis of a voltage rise across the associated thyristor in the thyristor three-phase controller.

6. Method according to Claims 1 to 3, having the following method step:

- the turn-on time ($t_{Ign+1}$) in a respective subsequent third current half-cycle ($S_{3L1}$) is determined using:

$$t_{Ign+1} = t_{Ext} + \frac{\alpha_C}{360°} * T$$

where:

$t_{Evt}$ = the turn-off time in the current half-cycle which precedes the third current half-cycle,
$T$ = the period duration
$\alpha_c$ = the corrected phase gating angle where:

$$\alpha_C = \alpha_T \pm C * \Delta\gamma$$

where

$\alpha_T$ = the averaged phase gating angle

$$\alpha_T = \frac{\alpha_n + \alpha_{n-1}}{2}$$

where:

$\alpha_{n-1}$ = the phase gating angle in a first current half-cycle
$\alpha_n$ = the phase gating angle in a second current half-cycle
$C$ = the correction factor (0.1 to 0.4, in particular 0.2)
$\Delta\gamma$ = the difference between successive current flow angles where:

$$\Delta\gamma = \gamma_n - \gamma_{n-1}$$

where:

$\gamma_{n-1}$ = the current flow angle in a first current half-cycle where:

$$\gamma_{n-1} = \frac{t_{Ext-1} - t_{Ign-1}}{T} * 360°$$

where:

$t_{Ext-1}$ = the turn-off time in the current half-cycle which precedes the second current half-cycle,
$t_{Ign-1}$ = the turn-on time in the current half-cycle which precedes the second current half-cycle,

where:

$\gamma_n$ = the current flow angle in a subsequent second current half-cycle, where:

$$\gamma_n = \frac{t_{Ext} - t_{Ign}}{T} * 360°$$

and the current flow angle in a further first current half-cycle for continuous matching where:

$$\gamma_{n-1} := \gamma_n$$

where:

$t_{Ign}$ = the turn-on time in the current half-cycle which follows the first current half-cycle.

7. Method according to Claims 1 to 4, for the first and/or for the second phase ($L_1$ and/or $L_2$, respectively) in the respective mutually independent drive.

8. Method according to Claims 1 to 5, in which the phases ($L_1$ and $L_2$) are driven in the form of ramps, for soft starting of the asynchronous motor.

9. Method for reducing the influence of a DC component in the load current of an asynchronous motor which is controlled via a two-phase thyristor three-phase controller with phase gating, having the following method steps:

a) first of all, the turn-on time ($t_{Ign-1}$) in a first current half-cycle ($S_{1L1}$) is recorded in a first controlled phase ($L_1$),
b) then, the current flow in the first current half-cycle ($S_{1L2}$) in a second controlled phase ($L_2$) is recorded at the turn-on time ($t_{1gn-1}$) of the first current half-cycle ($S_{1L1}$) in the first controlled phase ($L_1$),
c) finally, the turn-on time ($t_{Ign}$) in the subsequent second current half-cycle ($S_{2L2}$) is advanced in the second controlled phase ($L_2$) on the basis of the recorded current flow.

10. Method according to Claim 7, having the following method step:

- the turn-on time ($t_{Ign}$) is determined continuously for a subsequent current half-cycle ($S_{2L2}$) by means of a definable correction factor (C).

11. Method according to Claim 8, having a correction factor (C) of -9° to -15°.

12. Method according to Claims 7 to 10, with the phases being driven in the form of ramps, for soft starting of the asynchronous motor.

**Revendications**

1. Procédé de diminution de l'influence d'une composante de courant continu du courant de charge d'un moteur asynchrone commandé avec retard de phase par un commutateur triphasé à thyristor à deux phases, comprenant les stades de procédé suivantes :

a) on détecte, d'abord dans une première phase ( $L_1$ ) commandée, l'angle ( $\gamma_{n-1}$ ) de flux de courant d'une première demi-onde ( $S_{1L1}$ ) de courant à partir de son instant ( $t_{Ign-1}$ ) d'amorçage et de son instant ( $t_{Ext-1}$ ) d'extinction,
b) ensuite, dans la première phase ( $L_1$ ) commandée, on détecte l'angle ( $\gamma_n$ ) de flux de courant d'une deuxième demi-onde ( $S_{2L1}$ ) de courant suivante à partir de son instant ( $t_{Ign}$ ) d'amorçage et de son instant ( $T_{Ext}$ ) d'extinction,
c) ensuite, on relève la différente ( $\Delta\gamma$ ) entre l'angle ( $\gamma_{n-1}$ ) de flux de courant de la première demi-onde ( $S_{1L1}$ ) de courant et l'angle ( $\gamma_n$ ) de flux de courant de la deuxième demi-onde ( $S_{2L1}$ ) de courant,
d) finalement, on détermine, dans la première phase ( $L_1$ ) commandée, sur la base de la différence ( $\Delta\gamma$ ) relevée, l'instant ( $t_{Ign+1}$ ) d'amorçage d'une troisième demi-onde ( $S_{3L1}$ ) de courant suivante en vue d'une égalisation des angles de flux de courant des demi-ondes de courant.

2. Procédé suivant la revendication 1, ayant le stade de procédé suivant :

- on détermine l'instant ( $t_{Ign+-1}$ ) d'amorçage en continu pour une demi-onde de courant suivante sur la base de la différence ( Δγ ) relevée des angles de flux de courant des demi-ondes de courant respectivement précédentes.

3. Procédé suivant la revendication 1 et/ou 2, ayant le stade de procédé suivant :

- on détermine l'instant ( $t_{\text{Ign+-1}}$ ) d'amorçage au moyen d'un facteur ( C ) de correction pouvant être définie.

4. Procédé suivant la revendication 3, ayant un facteur ( C ) de correction de 0,1 à 0,4, notamment de 0,2.

5. Procédé suivant la revendication 1 et/ou 2, ayant le stade de procédé suivant :

- on relève l'instant respectif d'amorçage et d'extinction au moyen d'une élévation de la tension aux bornes du thyristor associé du commutateur de courant triphasé à thyristor.

6. Procédé suivant l'une des revendications 1 à 3, ayant le stade de procédé suivant :

- on détermine l'instant ( $t_{\text{Ign+-1}}$ ) d'amorçage d'une troisième demi-onde ( $S_{3L1}$ ) de courant suivante respectivement, conformément à :

$$t_{Ign+1} = t_{Ext} + \frac{\alpha_C}{360°} * T$$

dans laquelle :

$t_{Ext}$ = instant d'extinction de la demi-onde de courant précédent la troisième demi-onde de courant
T = période
$\alpha_c$ = angle de retard de phase corrigé suivant :

$$\alpha_C = \alpha \quad \pm C * \Delta\gamma$$

dans laquelle :

- $\alpha$ = angle de retard de phase en moyenne

$$\alpha_T = \frac{\alpha_n + \alpha_{n-1}}{2}$$

dans -laquelle :

$\alpha_{n-1}$ = angle de retard de phase d'une première demi-onde de courant
$\alpha_n$ = angle de retard de phase d'une deuxième demi-onde de courant
C = facteur de correction ( 0,1 à 0,4, notamment 0,2 )
$\Delta\gamma$ = différence d'angle de flux de courant se suivant conformément à :

$$\Delta\gamma = \gamma_n - \gamma_{n-1}$$

dans laquelle :

$\gamma_{n-1}$ = angle de flux de courant d'une première demi-onde de courant conformément à :

$$\gamma_{n-1} = \frac{t_{Ext-1} - t_{Ign-1}}{T} * 360°$$

dans laquelle :

$t_{Ext-1}$ = instant d'extinction de la demi-onde de courant précédant la deuxième demi-onde de courant
$t_{Ign-1}$ = instant d'amorçage de la demi-onde de courant précédant la deuxième demi-onde de courant

dans laquelle :

$\gamma_n$ = angle de flux de courant d'une deuxième demi-onde de courant suivante conformément à :

$$\gamma_n = \frac{t_{Ext} - t_{Ign}}{T} * 360°$$

ou angle de flux de courant d'une autre première demi-onde de courant, lors d'une égalisation qui se poursuit conformément à

$$\gamma_{n-1} = \gamma_n$$

dans laquelle :

$t_{Ign}$ = instant d'amorçage de la demi-onde de courant suivant la première demi-onde de courant.

7. Procédé suivant l'une des revendications 1 à 4, pour la première et/ou pour la deuxième phase ( $L_1$ ou $L_2$ ) en commande respectivement indépendante l'une de l'autre.

8. Procédé suivant l'une des revendications 1 à 5, comprenant, en vue d'un démarrage doux du moteur asynchrone, une commande de type à rampe des phases ( $L_1$ et $L_2$ ).

9. Procédé de diminution de l'influence d'une composante de courant continu du courant de charge d'un moteur asynchrone commandé avec retard de phase par un commutateur triphasé à thyristor à deux phases, comprenant les stades de procédé suivantes :

a) d'abord on relève, dans une première phase ( $L_1$ ) commandée, l'instant ( $t_{Ign-1}$ ) d'amorçage d'une première demi-onde ( $S_{1L1}$ ) de courant,
b) ensuite, on relève, à l'instant ( $t_{Ign-1}$ ) d'amorçage de la première demi-onde ( $S_{1L1}$ ) de courant de la première phase ( $L_1$ ) commandée, le flux de courant dans la première demi-onde ( $S_{1L2}$ ) de courant d'une deuxième phase ( $L_2$ ) commandée,
c) finalement, on établit à l'avance dans la deuxième phase ( $L_2$ ) commandée, sur la base du flux de courant relevé, l'instant ( $t_{Ign}$ ) d'amorçage de la deuxième demi-onde ( $S_{2L2}$ ) de courant suivante.

10. Procédé suivant la revendication 7, ayant le stade de procédé suivant :

- on détermine l'instant ( $t_{Ign}$ ) d'amorçage en continu pour une demi-onde ( $S_{2L2}$ ) de courant suivante au moyen d'un facteur ( C ) de correction qui peut être définie.

11. Procédé suivant la revendication 8, ayant un facteur ( C ) de correction de -9° à -15°.

12. Procédé suivant l'une des revendications 7 à 10, ayant une commande des phases de type à rampe en vue d'un démarrage doux du moteur asynchrone.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3009445 A1
- WO 9816004 A